# EUROPÄISCHE PATENTSCHRIFT

(11) **EP 2 470 396 B1**
(45) Veröffentlichungstag und Bekanntmachung des Hinweises auf die Patenterteilung: **16.10.2013**
(21) Anmeldenummer: 10744581.9
(22) Anmeldetag: 17.08.2010
(51) Int. Cl.: B60R 3/02

(54) **EINSTIEGSHILFSVORRICHTUNG ZUM ERLEICHTERN EINES ZUGANGS ZU EINEM FAHRZEUG**
BOARDING ASSISTANCE DEVICE FOR FACILITATING ENTRY INTO A VEHICLE
DISPOSITIF AUXILIAIRE D'ACCÈS, DESTINÉ À FACILITER UN ACCÈS À UN VÉHICULE

(30) Priorität: 28.08.2009 DE 102009039035
(43) Veröffentlichungstag der Anmeldung: 04.07.2012
(73) Patentinhaber: Knorr-Bremse GmbH, 2340 Mödling (AT)
(72) Erfinder: ÜBELLACKER, Andreas, A-3363 Neuhofen/Ybbs (AT)
(74) Vertreter: Schönmann, Kurt
(86) Internationale Anmeldenummer: PCT/EP2010/061981
(87) Internationale Veröffentlichungsnummer: WO 2011/023600

(56) Entgegenhaltungen:
- EP-A1- 0 483 912
- EP-A2- 1 787 612
- DE-A1- 10 351 988
- DE-U1-202008 004 592

## Beschreibung

Die vorliegende Erfindung bezieht sich auf eine Einstiegshilfsvorrichtung zum Erleichtern eines Zugangs zu einem Fahrzeug, die beispielsweise bei Schienenfahrzeugen eingesetzt werden kann.

Ausfahrbare Trittplatten erleichtern Fahrgästen von Schienenfahrzeugen das Ein- und Austeigen. In diversen Normen gibt es die Forderung, dass ab einer bestimmten vertikalen Belastung auf eine Trittplatte einer Einstiegshilfe, zum Schutz der Fahrgäste, diese nicht mehr betrieben werden darf.

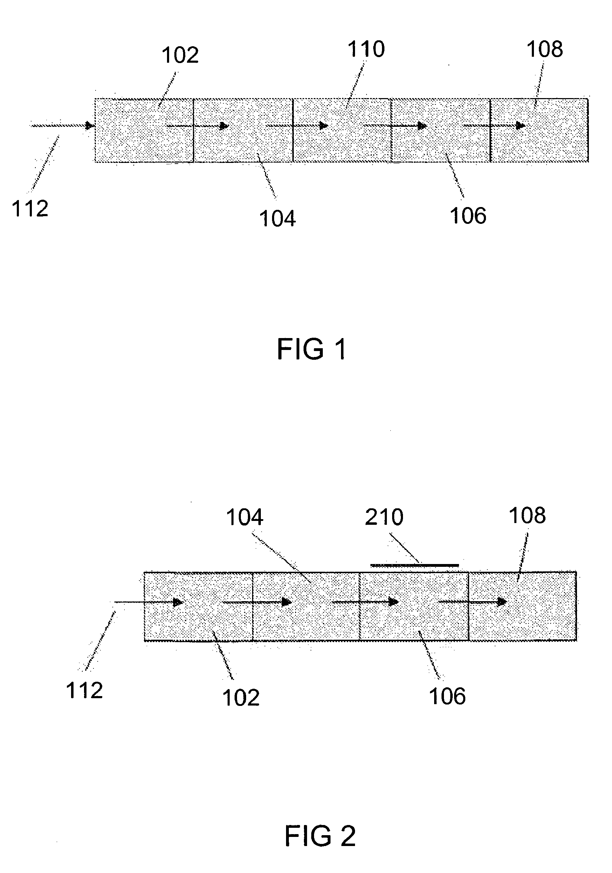

Fig. 1 zeigt eine schematische Darstellung der Einstiegshilfsvorrichtung, gemäß dem Stand der Technik. Die Einstiegshilfsvorrichtung weist eine Trittplatte 102, einen Einstiegshilfenrahmen 104 und ein Befestigungselement 106 zum Befestigen der Einstiegshilfsvorrichtung an einer Fahrzeugstruktur 108 auf. Zwischen dem Einstiegshilfenrahmen 104 und dem Befestigungselement 106 ist ein Messelement 110 angeordnet. Bei einer Belastung auf die Trittplatte 102 wirkt ein Kraftfluss 112 auf die Trittplatte 102 und von der Trittplatte 102 über den Einstiegshilfenrahmen 104, das Messelement 110 und das Befestigungselement 106 auf die Fahrzeugstruktur 108. Das Messelement 110 ermöglicht eine interne Messung im Kraftfluss.

Die Druckschrift EP 1 470 959 B1 betrifft eine unterhalb einer Tür eines Fahrzeuges mittels Befestigungsgliedern befestigbare Trittplattenanordnung. Das Aus- und Einfahren einer Trittplatte wird unterbrochen, wenn die Trittplatte in Vertikalrichtung belastet wird. Dazu ist ein Sensor, insbesondere eine Wägezelle, direkt in der Übertragungskette der Kräfte angeordnet. Wägezellen müssen bei jedem unterschiedlichen Belastungsfall angepasst werden.

Die Druckschrift DE 10 2007 044 186 A1 betrifft einen Schiebetritt für Schienenfahrzeuge. Eine unerwünschte Bewegung einer Trittplatte des Schiebetritts kann verhindert werden, wenn die Trittplatte vertikal von oben mit einer Last beaufschlagt ist. Dazu ist an mindestens einem Auflagesockel eine Messkammer, mit einem Scherkräfte messenden Sensor, angeordnet.

Die Druckschrift EP 1 787 612 A2 beschreibt eine Zustiegs- und Zufahrtshilfe mit wenigstens einem Dehnungsmessstreifen zur Erfassung von horizontalen und/oder vertikalen Störkräften, die auf eine beweglich gelagerte, an einem Fahrzeug zur Personenbeförderung vorgesehene Trittplatte einwirken können. Dabei ist der wenigstens eine Dehnungsmessstreifen an einem stationären, bei der Bewegung der Trittplatte nicht bewegten Teil der Zustiegs- und/oder Zufahrtshilfe angebracht.

Die Druckschrift EP 0 483 912 A1 beschreibt einen scheibenförmigen Messwertaufnehmer für eine Wägezelle mit parallel zueinander und in Wirkrichtung einer zu messenden Kraft angeordneten Oberflächen, von denen mindestens eine einen Messfühler zur Umwandlung einer messkraftabhängigen Verformung in ein auswertbares Signal aufweist.

Es ist die Aufgabe der vorliegenden Erfindung eine verbesserte Einstiegshilfsvorrichtung zu schaffen.

Diese Aufgabe wird durch eine Einstiegshilfsvorrichtung gemäß Anspruch 1 gelöst.

Die Erfindung beinhaltet die Möglichkeit, eine Belastung auf einer Trittplatte einer Einstiegshilfe im Schienenfahrzeugbau, Busbau, bei Bahnsteigausstattungen oder Seilbahnen zu detektieren. Hierzu dienen mindestens ein oder mehrere Messelemente, die an Befestigungselementen der Einstiegshilfe angebracht sind. Durch die Erfindung wird die Belastung auf der Trittplatte erkannt und es kann ein Signal an eine Steuerung weitergegeben, werden wodurch weitere Aktionen eingeleitet werden können, wie z.B. ein Reversieren der Trittplatte.

Der erfindungsgemäße Ansatz basiert darauf, dass nicht die Kraft in den Befestigungselementen gemessen wird, sondern eine Verformung bzw. eine Dehnung der Befestigungselemente. Dehnungsmessstreifen können für unterschiedliche Belastungsfälle verwendet werden. Sobald eine andere Bauform bzw. andere Belastung gegeben ist, kann das Messelement, für diese Kraftflussänderung neu ausgelegt werden. Die erfindungsgemäße Messanordnung kann ohne großen Änderungsaufwand auf Elemente im Kraftfluss aufgebracht werden.

Die vorliegende Erfindung schafft eine Einstiegshilfsvorrichtung zum Erleichtern eines Zugangs zu einem Fahrzeug, mit folgenden Merkmalen: einem Trittrahmen, der ausgebildet ist, um eine Trittplatte zum Erleichtern des Zugangs zu halten; mindestens einem Befestigungselement, das geeignet ist, um den Trittrahmen an einem Fahrzeug oder an einem Zugangsbauwerk zu befestigen; und mindestens einem Messelement, das mit dem mindestens einem Befestigungselement gekoppelt ist, um eine Dehnung oder Stauchung des Befestigungselements zu erfassen.

Bei dem Fahrzeug kann es sich um ein Schienenfahrzeug, einen Bus oder eine Seilbahn handeln. Bei dem Zugangsbauwerk kann es sich um einen Bahnsteig handeln. Die Trittplatte kann von einer Person betreten werden und der Person ein Einsteigen in oder ein Austeigen aus dem Fahrzeug erleichtern. Dazu kann die Trittplatte im Bereich einer Türschwelle einer Fahrzeugtür angeordnet sein und beispielsweise einen Zwischenraum zwischen Fahrzeug und Zugangsbauwerk überbrücken oder eine Stufe zwischen Fahrzeugtür und Boden darstellen. Der Trittrahmen kann über das mindestens eine Befestigungselement fest mit dem Fahrzeug oder dem Zugangsbauwerk verbunden werden. Beispielsweise kann der Trittrahmen auf einer Unterseite des Fahrzeugs oder des Zugangsbauwerks angeordnet werden. Der Trittrahmen bietet wiederum eine Befestigung für die Trittplatte. Kann die Trittplatte zwischen einer ausgefahrenen Stellung, in der sie den Zugang erleichtern kann und einer eingefahrenen Stellung hin und her bewegt werden, so kann der Trittrahmen ausgebildet sein, um die Trittplatte in der eingefahrenen Stellung teilweise oder vollständig aufzunehmen. Das Messelement kann einen Sensor umfassen und fest oder lösbar mit dem Befestigungselement verbunden sein. Das Messelement kann dabei außerhalb eines Kraftflusses einer Kraft sein, die über das Befestigungselement zwischen dem Trittrahmen und dem Fahrzeug oder dem Zugangsbauwerk übertragen wird. Insbesondere kann das Messelement nicht zur Übertragung der Kraft ausgelegt sein. Die Dehnung oder Stauchung kann durch eine auf die Trittplatte ausgeübte Kraft hervorgerufen werden, die über den Trittrahmen auf das Befestigungselement übertragen wird. Die Kraft auf die Trittplatte kann beispielsweise der Gewichtskraft einer auf der Trittplatte stehenden Person entsprechen. Durch die Dehnung oder Stauchung, also beispielsweise eine Verformung in der Längsrichtung des Befestigungselements, können sich eine Länge und ein Durchmesser des Befestigungselements verändern. Diese Veränderung kann von dem Messelement erfasst werden. Als Messelement kann jede Art von Messtechnik eingesetzt werden, die geeignet ist, um die Verformung des Befestigungselements zu erfassen.

Gemäß einer Ausführungsform kann das Befestigungselement vertikal ausgerichtet sein. Der Trittrahmen kann horizontal angeordnet sein. Somit kann das Befestigungselement senkrecht zu dem Trittrahmen ausgerichtet sein. Horizontal und vertikal kann dabei auch in Bezug auf eine durch eine Längsachse und eine Querachse des Fahrzeugs oder des Zugangsbauwerks aufgespannte Ebene gesehen werden. Je nach Ausführungsform der einzelnen Elemente der Einstiegshilfsvorrichtung sowie eines Befestigungsbereichs an dem Fahrzeugs oder dem Zugangsbauwerk können Abweichungen von einer exakt horizontalen und vertikalen Ausrichtung bestehen. Der Trittrahmen kann jedoch nicht nur horizontal sondern auch schräg eingebaut werden und die Befestigungselemente können senkrecht oder waagrecht sein. Somit kann der Trittrahmen abweichend von der Horizontalen ausgerichtet sein und durch weitere vertikal, schräg oder horizontal ausgerichtete Befestigungseinrichtungen an dem Fahrzeug oder dem Zugangsbauwerk befestigt werden. In diesen Fällen kann das mit dem Messelement gekoppelte Befestigungselement dennoch vertikal oder parallel zu der auf die Trittplatte ausgeübten Kraft ausgerichtet sein.

Der Trittrahmen kann ausgebildet sein, um die Trittplatte beweglich zu lagern. Dadurch kann die Trittplatte in den Trittrahmen eingefahren und herausgefahren werden. Beispielsweise kann die Trittplatte horizontal zu dem Trittrahmen bewegt werden. Die Ausfahrbewegung kann jedoch nicht nur horizontal sondern zusätzlich oder alternativ kurvenförmig erfolgen. Insbesondere bei Rampen kann sich die Trittplatte während der Ausfahrbewegung absenken damit sie auf dem Bahnsteig aufliegt. Je nach Bewegungsform können entsprechende Führungen am Trittrahmen vorgesehen sein.

Das Messelement kann ausgebildet sein, um eine geradlinige Dehnung oder Stauchung des Befestigungselements in Längsrichtung des Befestigungselements zu erfassen. Die Längsrichtung des Befestigungselements kann sich zwischen dem Trittrahmen und dem Fahrzeug oder dem Zugangsbauwerk erstrecken.

Demnach kann das Messelement ausgebildet sein, um eine durch eine vertikale Belastung der Trittplatte hervorgerufene Verformung des Befestigungselements zu erfassen und ein, der vertikalen Belastung entsprechendes Messsignal an eine Schnittstelle zu einem Steuergerät bereitzustellen. Bei dem Messsignal kann es sich um ein elektrisches Signal handeln, das von dem Steuergerät empfangen und ausgewertet werden kann. Das Steuergerät kann ausgebildet sein, um eine Bewegung der Trittplatte zu unterbrechen, wenn ein Vergleich des Messsignals mit einem vorbestimmten Wert auf eine Belastung der Trittplatte schließen lässt.

Erfindungsgemäß kann das Messelement als Dehnungsmessstreifen ausgebildet sein, der auf einer Oberfläche des Befestigungselements angeordnet ist. Beispielsweise kann der Dehnungsmessstreifen mit einer äußeren Oberfläche des Befestigungselements verbunden sein. Dazu kann der Dehnungsmesstreifen auf die Oberfläche geklebt sein. Eine Verformung des Befestigungselements kann zu einer auswertbaren Veränderung des elektrischen Widerstands des Dehnungsmesstreifens führen. Der Dehnungsmessstreifen ist kostengünstig und kann auf einfache Weise in bereits bestehende Systeme integriert werden. Auch ist eine einfache Nachrüstung möglich.

Alternativ oder zusätzlich kann das Messelement als Dehnungsmessstreifen-Einpresssensor (DMS-Einpresssensor) ausgebildet sein, der in dem Befestigungselement angeordnet ist. Der Einpresssensor kann aufgrund seiner integrierten Anordnung eine hohe Ausfallsicherheit und Messgenauigkeit aufweisen. Der Einpresssensor kann in ein Loch in dem Befestigungselement eingepresst sein, so dass der Kraftfluss durch das Befestigungselement um den Einpresssensor herum verlaufen kann, eine Verformung des Befestigungselements jedoch zu einer Verformung des Einpresssensors führen kann.

Gemäß einer Ausführungsform kann das Befestigungselement einen ersten Abschnitt zu einem Verbindungsbereich zu dem Trittrahmen, einen zweiten Abschnitt zu einem Verbindungsbereich zu dem Fahrzeug oder dem Zugangsbauwerk und einen Zwischenabschnitt zum Verbinden des ersten Abschnitts und des zweiten Abschnitts aufweisen. Der Zwischenabschnitt kann einen geringeren Durchmesser als der erste Abschnitt und der zweite Abschnitt aufweisen und das Messelement kann mit dem Zwischenabschnitt gekoppelt sein. Aufgrund des geringeren Durchmessers kann es im Bereich des Zwischenabschnitts zu einer stärkeren Verformung kommen, die dann vom Messelement erfasst werden kann. Die einzelnen Abschnitte können stabförmig, beispielsweise in Form eines Aufhängungsbolzens, ausgebildet sein. Das Befestigungselement an dem die Messstelle aufgebracht ist muss jedoch nicht stabförmig ausgeführt werden, so dass auch andere geeignete Formen eingesetzt werden können.

Der Trittrahmen weist eine dem Fahrzeug oder dem Zugangsbauwerk zugewandte Rahmenfläche und eine dem Fahrzeug oder dem Zugangsbauwerk abgewandte Rahmenfläche auf. Das Befestigungselement kann mit der abgewandten Rahmenfläche fest verbunden sein und durch eine Durchgangsöffnung der zugewandten Rahmenfläche geführt werden. Dies ermöglicht eine sichere Befestigung des Trittrahmens durch das Befestigungselement.

Beispielsweise kann das Befestigungselement mittels einer Schraubverbindung mit der abgewandten Rahmenfläche verbunden sein. Dies ermöglicht eine einfache Montage. Das Befestigungselement kann stabförmig oder streifenförmig ausgebildet sein. Somit kann beispielsweise ein Aufhängunsbolzen oder ein Flachmetall als Befestigungselement eingesetzt werden. Auch ist eine Befestigungskonsole als Befestigungselement möglich.

Gemäß einer Ausführungsform kann die Einstiegshilfsvorrichtung ein vorderes Befestigungselement, das an einem der Trittplatte zugewandten Ende des Trittrahmens angeordnet ist und ein hinteres Befestigungselement, das an einem der Trittplatte abgewandtem Ende des Trittrahmens angeordnet ist aufweisen. Ein erstes Messelement kann mit dem vorderen Befestigungselement gekoppelt und/oder ein zweites Messelement kann mit dem hinteren Befestigungselement gekoppelt sein. Durch die beidseitig des Trittrahmens angeordneten Befestigungselemente kann die Stabilität der Einstiegshilfsvorrichtung erhöht werden. Beispielsweise können ein vorderes Befestigungselement und zwei hintere Befestigungselemente eingesetzt werden, wobei das Messelement mit dem vorderen Befestigungselement gekoppelt sein kann. Auch können ein hinteres Befestigungselement und zwei vordere Befestigungselemente eingesetzt werden, wobei das Messelement mit dem hinteren Befestigungselement gekoppelt sein kann. Andere Kombinationen sind je nach Anforderungsprofil ebenfalls möglich.

Dabei kann das hintere Befestigungselement ein Drehgelenk aufweisen. Das zweite Messelement kann mit einem zwischen dem Drehgelenk und einem Verbindungsbereich zu dem Fahrzeug oder dem Zugangsbauwerk angeordneten Bereich des hinteren Befestigungselements gekoppelt sein. Wird an der vorderen und an der hinteren Befestigung ein Messelement angebracht, so kann das hintere Befestigungselement ohne Drehgelenk, beispielsweise entsprechend dem vorderen Befestigungselement, ausgeführt werden. Durch das Drehgelenk kann die Verformung auf das vordere Befestigungselement verbessert werden.

Das mindestens eine Befestigungselement kann ausgebildet sein, um den Trittrahmen an einer Unterseite oder in einen Fußbodenaufbau des Fahrzeugs oder des Zugangsbauwerks zu befestigen.

Zusätzlich oder alternativ zu dem erfindungsgemäßen Ansatz kann das Gehäuse des Trittrahmens an der Vorderseite vertikal gegen eine Feder gelagert werden. Bei Belastung der Trittplatte wird das Gehäuse einen definierten Weg nach unten gedrückt. Diese Positionsänderung kann mittels mechanischen Endschalters abgetastet werden. Generell können zur Belastungsdetektion Dehnmessstreifen oder Kraftaufnehmer verwendet werden.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung einer Einstiegshilfsvorrichtung gemäß dem Stand der Technik; und
- Fig. 2: eine schematische Darstellung einer Einstiegshilfsvorrichtung gemäß einem Ausführungsbeispiel der vorliegenden Erfindung;
- Fig. 3: eine Darstellung einer Einstiegshilfsvorrichtung gemäß einem Ausführungsbeispiel der vorliegenden Erfindung;
- Fig. 4: eine Detailansicht der in Fig. 3 gezeigten Einstiegshilfsvorrichtung;
- Fig. 5: eine Darstellung einer Einstiegshilfsvorrichtung gemäß einem weiteren Ausführungsbeispiel der vorliegenden Erfindung;
- Fig. 6: eine Detailansicht der in Fig. 5 gezeigten Einstiegshilfsvorrichtung;
- Fig. 7: eine Darstellung einer Einstiegshilfsvorrichtung gemäß einem weiteren Ausführungsbeispiel der vorliegenden Erfindung; und
- Fig. 8: eine weitere Darstellung der in Fig. 7 gezeigten Einstiegshilfsvorrichtung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

Fig. 2 zeigt eine schematische Darstellung einer Einstiegshilfsvorrichtung gemäß einem Ausführungsbeispiel der vorliegenden Erfindung. Die Einstiegshilfsvorrichtung weist eine Trittplatte 102, einen Einstiegshilfenrahmen 104 und ein Befestigungselement 106 zum Befestigen der Einstiegshilfsvorrichtung an einer Fahrzeugstruktur 108 auf. Mittels eines Messelements 210 erfolgt eine externe Messung des Befestigungselements 106. Somit befindet sich das Messelement 210 nicht im Kraftfluss. Beispielsweis kann das Messelement 210 auf einer Oberfläche des Befestigungselements 106 angeordnet sein. Eine Belastung auf der Trittplatte 102, beispielsweise durch eine Person, bewirkt einen Kraftfluss 112 von der Trittplatte 102 über den Einstiegshilfenrahmen 104 und das Befestigungselement 106, vorbei an dem Messelement 210, auf die Fahrzeugstruktur 108. Der Kraftfluss 112 ist in Fig. 1 durch Pfeile angedeutet. Der Kraftfluss 112 kann eine Dehnung des Befestigungselements 106 bewirken, die von dem Messelement 210 erfasst werden kann.

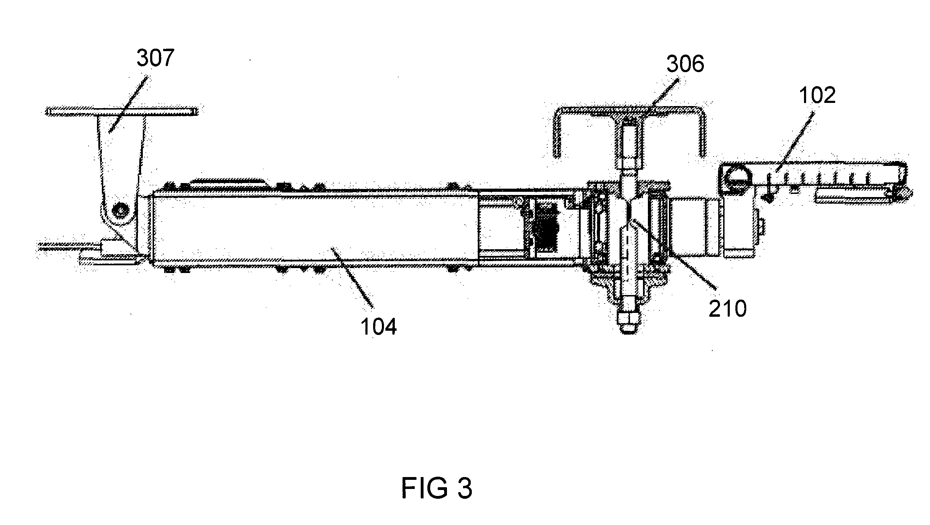

Fig. 3 zeigt eine Darstellung einer Einstiegshilfsvorrichtung, gemäß einem weiteren Ausführungsbeispiel der vorliegenden Erfindung. Die Einstiegshilfsvorrichtung weist einen Trittrahmen 104, eine Trittplatte 102, ein Befestigungselement vorne 306, ein Befestigungselement hinten 307 und ein Messelement 210 auf.

Die Einstiegshilfsvorrichtung kann mittels der Befestigungselemente 306, 307, beispielsweise unterhalb eines Wagenkastens eines Schienenfahrzeuges, montiert werden. Dabei kann sich der Trittrahmen 104 direkt unterhalb einer Tür des Schienenfahrzeugs befinden. Der Trittrahmen 104 kann sich parallel zu einer Unterseite des Fahrzeugs erstrecken und durch über den Trittrahmen 104 hervorstehende Bereiche der Befestigungselemente 306, 307 von der Unterseite beabstandet sein. Die Befestigungselemente 306, 307 können senkrecht zu der Unterseite bzw. zu einer Hauptfläche des Trittrahmens 104 ausgerichtet sein. Das vordere Befestigungselement 306 kann an einem der Trittplatte 102 zugewandten Ende des Trittrahmens 104 angeordnet sein und das hintere Befestigungselement 307 kann an einem der Trittplatte 102 abgewandten Ende des Trittrahmens 104 angeordnet sein.

Der Trittrahmen 104 kann ein Bodenelement und ein Deckelelement aufweisen. Auf einem der Trittplatte 102 zugewandten Ende kann der Trittrahmen 104 eine vordere Öffnung aufweisen. Die Trittplatte 102 oder eine Befestigungsschiene der Trittplatte 102 können durch die vordere Öffnung des Trittrahmens 104 einfahren. Somit kann die Trittplatte 102 oder die Befestigungsschiene der Trittplatte 102 mittels einer Antriebseinrichtung in eine Verwahrstellung in den Trittrahmen 104 eingeführt werden. Umgekehrt kann die Trittplatte 102 oder die Befestigungsschiene der Trittplatte 102 mittels einer Antriebseinrichtung aus der Verwahrstellung ausgefahren werden, um beispielsweise einen Spalt zwischen der Tür des Schienenfahrzeugs und einer Bahnsteigkante zu überbrücken. Die Antriebseinrichtung kann in dem Trittrahmen 104 angeordnet sein.

Das vordere Befestigungselement 306 ist in Form eines Bolzens ausgeführt, der in einem Zwischenbereich, der mittig angeordnet sein kann, eine Verjüngung aufweisen kann. Die Verjüngung kann innerhalb des Trittrahmens 104, also zwischen dem Bodenelement und dem Deckelelement des Trittrahmens 104 angeordnet sein. An einem durch das Deckelelement geführten Ende des Befestigungselements 306 kann ein T-förmiges Trägerelement angeordnet sein, das eine Befestigung des Befestigungselements 306 an einem Unterboden des Fahrzeugs ermöglicht. Ein durch das Bodenelement geführtes Ende des Befestigungselements 306 kann ein Gewinde aufweisen und mittels einer Mutter mit dem Bodenelement des Trittrahmens 104 verbunden sein.

Gemäß diesem Ausführungsbeispiel gibt es nur ein vorderes Befestigungselement 306, das in der Mitte des Trittes 102 angebracht ist. Das Befestigungselement 306 kann auf unterschiedliche Art und Weise mit dem Trittrahmen verbunden werden. Beispielsweise kann der Trittrahmen 104 nur auf dem vorderen Befestigungselement 306 aufliegen, d.h. der Trittrahmen 104 kann verschiebbar zum vorderen Befestigungselement 306 sein. Als Material für das Befestigungselement eignen sich Metalle und insbesondere Stahlteile, beispielsweise Standardstahl mit einer entsprechenden Oberflächenbehandlung oder Edelstahl. Zwei hintere Befestigungselemente 307 können jeweils an gegenüberliegenden hinteren Enden des kastenförmigen Trittrahmens 104 angeordnet sein. Die Trittplatte 102 kann als rechteckiger Schiebetritt ausgeformt sein und im eingefahrenen Zustand an eine vordere Kante des Trittrahmens 104 angrenzen.

Das Messelement 210 oder mehrere Messelemente können auf einer Oberfläche des Zwischenbereichs des Befestigungselements 306 oder in einer oder mehreren Aussparung des Zwischenbereichs angeordnet sein.

Das hintere Befestigungselement 307 kann über ein Drehgelenk mit dem Trittrahmen 104 verbunden sein. Das Drehgelenk kann durch einen Befestigungsbolzen realisiert sein, der durch eine Durchgangsöffnung in dem Befestigungselement 307 und eine Durchgangsöffnung in einem Befestigungsfortsatz des Trittrahmens 104 geführt ist. Das Drehgelenk kann höhenmäßig in einem Bereich zwischen dem Bodenelement und dem Deckelelement des Trittrahmens 104 angeordnet sein. An einem dem Drehgelenk gegenüberliegenden Ende des hinteren Befestigungselements 307 kann eine Platte angeordnet sein, über die das hintere Befestigungselement 307 mit dem Fahrzeugboden verbunden werden kann. Bei einer Belastung der Trittplatte 102 kann der Trittrahmen 104 eine geringfügige Drehbewegung um das Drehgelenk ausführen, die zu einer Dehnung des vorderen Befestigungselements 306 führt. Zusätzlich führt die Belastung der Trittplatte 102 zu einer Dehnung des hinteren Befestigungselements 307, die durch ein weiteres Messelement erfasst werden kann. Das weitere Messelement kann auf einer Oberfläche oder in einer Aussparung des hinteren Befestigungselements 307 angeordnet sein.

Das Funktionsprinzip der Einstiegshilfsvorrichtung basiert darauf, dass bei einer vertikalen Belastung auf die Trittplatte 102 der Einstiegshilfe Zug- bzw. Druckkräfte in den Befestigungselementen 306, 307 entstehen. Diese Kräfte führen zu einer Dehnung bzw. Verformung der Befestigungselemente 306, 307. Diese Verformung wird mit einem Messelement 210 gemessen und ein Signal an eine Steuerung weitergeleitet. Bei Überschreiten eines vordefinierten Grenzwertes wird eine Bewegung der Trittplatte 102 gestoppt.

Die Messelemente 210 können vorzugsweise als Dehnungsmessstreifen oder als DMS-Einpresssensor ausgeführt werden.

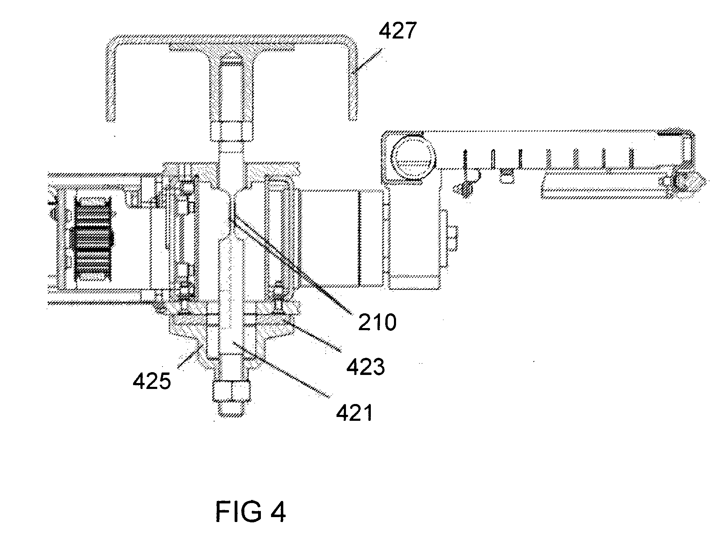

Fig. 4 zeigt eine Darstellung des in Fig. 3 gezeigten Befestigungselements 306, gemäß einem Ausführungsbeispiel der vorliegenden Erfindung. Das Befestigungselement 306 weist einen Aufhängungsbolzen 421 auf. Der Aufhängungsbolzen 421 kann zylinderförmig sein. In einem Bereich, in dem der Aufhängungsbolzen 421 eine Verjüngung aufweist, können an einander gegenüberliegenden Oberflächen des Aufhängungsbolzens 421 zwei Dehnungsmessstreifen 210 angeordnet sein. Der Aufhängungsbolzen 421 kann mit einer unteren Fläche des Trittrahmens kraft-, form- und/oder stoffschlüssig verbunden sein. Gemäß diesem Ausführungsbeispiel ist der Aufhängungsbolzen 421 über eine Gummiplatte 423 und einem Anschlag 425, die beide optional sind, mit dem Trittbrettrahmen verbunden. Der Aufhängungsbolzen 421 kann durch eine Durchgangsöffnung einer oberen Fläche des Trittrahmens geführt sein und mit einer Befestigungskonsole 427 verbunden sein. In dem Bereich der Durchgangsöffnung kann der Aufhängungsbolzen 421 verschiebbar gegenüber dem Trittrahmen geführt sein.

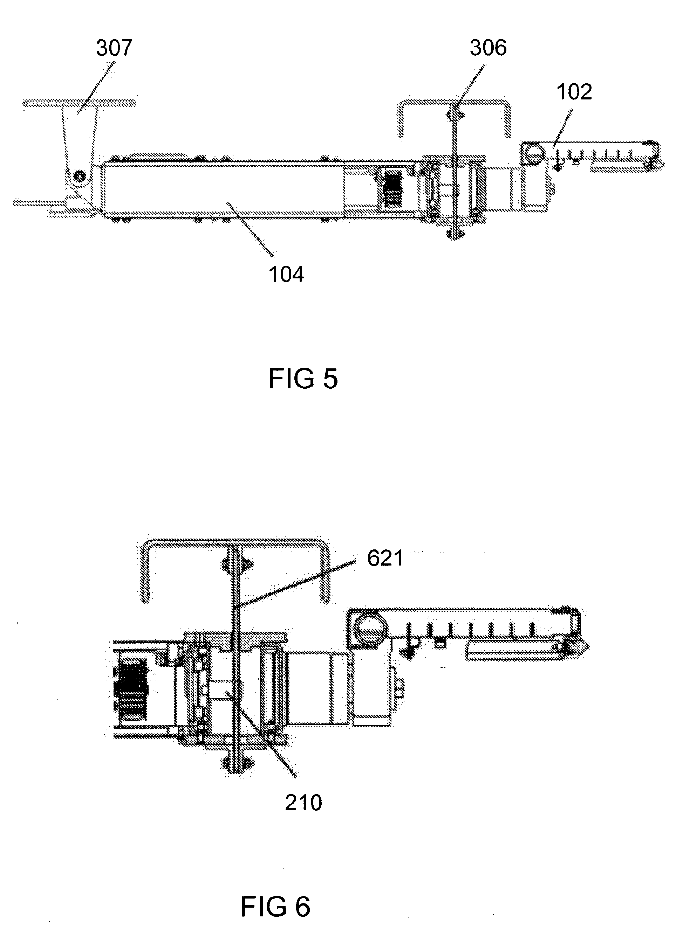

Fig. 5 zeigt eine Darstellung einer Einstiegshilfsvorrichtung in Form eines Schiebetritts, gemäß einem weiteren Ausführungsbeispiel der vorliegenden Erfindung. Im Unterschied zu dem in Fig. 3 gezeigten Ausführungsbeispiel ist das Messelement als Kraftaufnehmer in Form eines DMS-Einpressensor ausgebildet. Dazu kann die Aufhängung 306 im Bereich des Messelements als ein Flachmetall ausgebildet sein.

Fig. 6 zeigt eine Darstellung des in Fig. 5 gezeigten Befestigungselements 306, gemäß einem Ausführungsbeispiel der vorliegenden Erfindung. Anstelle des in Fig. 4 gezeigten Aufhängungsbolzens weist das Befestigungselement 306 eine Aufhängelasche 621 auf. Die Aufhängelasche 621 kann streifenförmig ausgebildet sein und in einem, im Inneren des Trittrahmens angeordneten Bereich ein Loch aufweisen, in das ein Kraftaufnehmer 210 in Form eines DMS-Einpressensors eingeführt sein kann. Der Kraftaufnehmer 210 kann von einem neben der Aufhängelasche 621 angeordneten Halteelement des Trittrahmens gehalten werden. Die Aufhängelasche 621 kann mit einer unteren Fläche des Trittrahmens kraft-, form- und/oder stoffschlüssig verbunden sein und durch eine Durchgangsöffnung einer oberen Fläche des Trittrahmens geführt sein, um mit einer Befestigungskonsole verbunden zu werden.

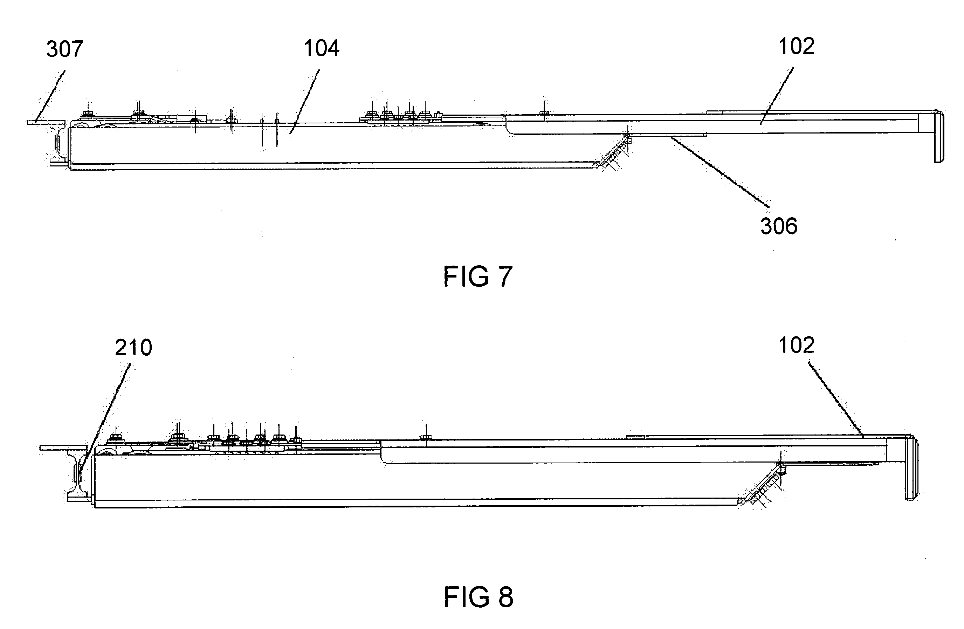

Fig. 7 zeigt eine Darstellung einer Einstiegshilfsvorrichtung, gemäß einem weiteren Ausführungsbeispiel der vorliegenden Erfindung. Gemäß diesem Ausführungsbeispiel wird eine Belastungsdetektion an einem Schiebetritt ermöglicht, der in eine Fußbodenstruktur eines Fahrzeuges montiert werden kann. Gezeigt sind eine Trittplatte 102 und ein Trittrahmen 104, wobei sich die Trittplatte 102 im ausgefahrenen Zustand befindet. Der Trittrahmen 104 kann über ein vorderes Befestigungselement 306 und ein hinteres Befestigungselement 307 über die der Trittrahmen 104 an der Fußbodenstruktur des Fahrzeugs befestigt werden kann. Das vordere Befestigungselement 306 ist als eine Befestigungskonsole ausgebildet. Die Befestigungskonsole kann einen parallel zu der Trittplatte 102 verlaufenden Bereich und einen abgewinkelten Bereich aufweisen. Der abgewinkelte Bereich kann parallel zu einer abgeschrägten Vorderkante des Trittrahmens verlaufen und mit dieser fest verbunden sein. Das hintere Befestigungselement 307 kann als eine weitere Befestigungskonsole ausgebildet sein. Die Befestigungskonsole kann einen parallel zu einer Oberseite des Trittrahmens verlaufende Befestigungsbereich zu der Fußbodenstruktur, einen parallel zu einer Unterseite des Trittrahmens verlaufende Befestigungsbereich zu dem Trittrahmen und ein vertikal oder im wesentlichen vertikale zwischen den beiden Befestigungsbereichen angeordnetes Zwischenelement, an dem ein Messelement angeordnet werden kann, um eine Dehnung oder Stauchung des Zwischenelements zu erfassen. Das hintere Befestigungselement 307 ist gemäß diesem Ausführungsbeispiel außerhalb und, in Bezug auf die Trittplatte 102, rückseitig des Trittrahmens 104 angeordnet. Entsprechend den Gegebenheiten können die Befestigungselemente 306, 307 auch anders ausgestaltet oder angeordnet sein.

Gemäß diesem Ausführungsbeispiel können bei dem gezeigten Schiebetritt zwei hintere und zwei vordere Befestigungen 306, 307 vorgesehen werden. Aus Kostengründen kann insbesondere bei einer Verwendung von DMS als Messelement die hintere Befestigung auf ein Befestigungselement 307 reduziert werden.

Fig. 8 zeigt eine Darstellung der in Fig. 7 gezeigten Einstiegshilfsvorrichtung, bei der sich die Trittplatte 102 eingefahren ist. Zum Bewegen der Trittplatte 102 kann der Trittrahmen auf seiner Oberseite entsprechende Führungen aufweisen, die eine Bewegung der Trittplatte 102 entlang der Oberfläche des Trittrahmens ermöglichen. Ferner sind Dehnungsmessstreifen 210 gezeigt, die an dem hinteren Befestigungselement angeordnet sind.

Die beschriebenen Ausführungsbeispiele sind nur beispielhaft gewählt und können miteinander kombiniert werden. Auch sind je nach Anwendungsfall abweichende Ausführungen der Befestigungselement sowie des Trittrahmens und des Trittbretts möglich. Alternativ zu der beschriebenen Anordnung an einem Schienenfahrzeug kann die erfindungsgemäße Einstiegshilfsvorrichtung auch an anderen Fahrzeugen oder Bauwerken oder Zugangsvorrichtungen angeordnet sein. Dabei kann die Einstiegshilfsvorrichtung auch oberseitig angeordnet sein, so dass die Befestigungselemente als Stützen fungieren.

### Bezugszeichenliste

- 102: Trittplatte
- 104: Trittrahmen
- 106: Befestigungselement
- 108: Fahrzeugstruktur
- 110: Messelement
- 112: Kraftfluss
- 210: Messelement
- 306: Befestigungselement vorne
- 307: Befestigungselement hinten
- 421: Aufhängungsbolzen
- 423: Gummiplatte
- 425: Anschlag
- 427: Befestigungskonsole
- 621: Aufhängelasche

## Patentansprüche

1. Einstiegshilfsvorrichtung zum Erleichtern eines Zugangs zu einem Fahrzeug, mit folgenden Merkmalen:
einem Trittrahmen (104), der ausgebildet ist, um eine Trittplatte (102) zum Erleichtern des Zugangs zu halten;
mindestens einem Befestigungselement (106; 306, 307), das geeignet ist, um den Trittrahmen an einem Fahrzeug oder an einem Zugangsbauwerk zu befestigen, wobei das Befestigungselement einen ersten Abschnitt zu einem Verbindungsbereich zu dem Trittrahmen, einen zweiten Abschnitt zu einem Verbindungsbereich zu dem Fahrzeug oder dem Zugangsbauwerk und einen Zwischenabschnitt zum Verbinden des ersten Abschnitts und des zweiten Abschnitts aufweist; und
mindestens einem Messelement (210), das mit dem Zwischenabschnitt des mindestens einem Befestigungselements gekoppelt ist, um eine Dehnung oder Stauchung des Befestigungselements zu erfassen.

2. Einstiegshilfsvorrichtung gemäß Anspruch 1, bei der das Befestigungselement (106; 306, 307) vertikal ausgerichtet ist.

3. Einstiegshilfsvorrichtung gemäß einem der vorangegangenen Ansprüche, bei der der Trittrahmen (104) ausgebildet ist, um die Trittplatte (102) beweglich zu lagern.

4. Einstiegshilfsvorrichtung gemäß einem der vorangegangenen Ansprüche, bei der das Messelement (210) ausgebildet ist, um eine geradlinige Dehnung oder Stauchung des Befestigungselements (106; 306, 307) in Längsrichtung des Befestigungselements zu erfassen.

5. Einstiegshilfsvorrichtung gemäß einem der vorangegangenen Ansprüche, bei der das Messelement (210) ausgebildet ist, um eine durch eine vertikale Belastung der Trittplatte (102) hervorgerufene Verformung des Befestigungselements (106; 306, 307) zu erfassen und ein, der vertikalen Belastung entsprechendes Messsignal an eine Schnittstelle zu einem Steuergerät bereitzustellen.

6. Einstiegshilfsvorrichtung gemäß einem der vorangegangenen Ansprüche, bei der das Messelement (210) als Dehnungsmessstreifen ausgebildet ist, der auf einer Oberfläche des Befestigungselements (106; 306, 307) angeordnet ist.

7. Einstiegshilfsvorrichtung gemäß einem der vorangegangenen Ansprüche, bei der das Messelement (210) als Dehnungsmessstreifen-Einpresssensor ausgebildet ist, der in dem Befestigungselement (106; 306, 307) angeordnet ist.

8. Einstiegshilfsvorrichtung gemäß einem der vorangegangenen Ansprüche, bei der das Befestigungselement (306) seinen ersten Abschnitt zu einem Verbindungsbereich zu dem Trittrahmen, einen zweiten Abschnitt zu einem Verbindungsbereich zu dem Fahrzeug oder dem Zugangsbauwerk und einen Zwischenabschnitt zum Verbinden des ersten Abschnitts und des zweiten Abschnitts aufweist, wobei der Zwischenabschnitt einen geringeren Durchmesser als der erste Abschnitt und der zweite Abschnitt aufweist, und wobei das Messelement (210) mit dem Zwischenabschnitt gekoppelt ist.

9. Einstiegshilfsvorrichtung gemäß einem der vorangegangenen Ansprüche, bei der der Trittrahmen (104) eine dem Fahrzeug oder dem Zugangsbauwerk zugewandte Rahmenfläche und eine dem Fahrzeug oder dem Zugangsbauwerk abgewandte Rahmenfläche aufweist und bei dem das Befestigungselement (306) mit der abgewandten Rahmenfläche fest verbunden ist und durch eine Durchgangsöffnung der zugewandten Rahmenfläche geführt ist.

10. Einstiegshilfsvorrichtung Anspruch 9, bei der das Befestigungselement (306) mittels einer Schraubverbindung mit der abgewandte Rahmenfläche verbunden ist.

11. Einstiegshilfsvorrichtung gemäß einem der vorangegangenen Ansprüche, bei der das Befestigungselement (306) stabförmig oder streifenförmig ausgebildet ist.

12. Einstiegshilfsvorrichtung gemäß einem der vorangegangenen Ansprüche, mit einem vorderen Befestigungselement (306), das an einem der Trittplatte (102) zugewandten Ende des Trittrahmens (104) angeordnet ist und einem hinteren Befestigungselement (307), das an einem der Trittplatte abgewandten Ende des Trittrahmens angeordnet ist, und bei der ein erstes Messelement (210) mit dem vorderen Befestigungselement gekoppelt ist und/oder ein zweites Messelement mit dem hinteren Befestigungselement gekoppelt ist.

13. Einstiegshilfsvorrichtung gemäß Anspruch 11, bei der das hintere Befestigungselement (307) ein Drehgelenk aufweist.

14. Einstiegshilfsvorrichtung gemäß einem der vorangegangenen Ansprüche, bei der das mindestens eine Befestigungselement (106; 306, 307) ausgebildet ist, um den Trittrahmen (104) an einer Unterseite oder in einen Fußbodenaufbau des Fahrzeugs oder des Zugangsbauwerks zu befestigen.

## Claims

1. Boarding assistance device for facilitating entry into a vehicle, comprising the following features:
a step frame (104) designed for holding a stepping board (102) for facilitating the entry;
at least one fastening element (106; 306, 307) that is suitable for fastening said step frame on a vehicle or on an entry structure, with said fastening element comprising a first portion towards a connecting region for connection to said step frame, a second portion towards a connection region for connection to the vehicle or said entry structure, and an intermediate portion for connecting said first portion and said second portion; and
at least one measuring element (210) coupled to said intermediate portion of said at least one fastening element for detecting extension or elongation or compression of said fastening element.

2. Boarding assistance device according to Claim 1, wherein said fastening element (106; 306, 307) is vertically oriented.

3. Boarding assistance device according to any of the preceding Claims, wherein said step frame (104) is configured for mobile support of said stepping board (102).

4. Boarding assistance device according to any of the preceding Claims, wherein said measuring element (210) is configured for detecting a straightline elongation or compression of said fastening element (106; 306, 307) along the longitudinal extension of said fastening element.

5. Boarding assistance device according to any of the preceding Claims, wherein said measuring element (210) is configured for detecting a deformation of said fastening element (106; 306, 307), which is created by a vertical load on said stepping board (102), and for providing a measuring signal corresponding to the vertical load to an interface with a controller.

6. Boarding assistance device according to any of the preceding Claims, wherein said measuring element (210) is designed as wire strain gauge that is disposed on a surface of said fastening element (106; 306, 307).

7. Boarding assistance device according to any of the preceding Claims, wherein said measuring element is designed as wire strain gauge press-in sensor that is disposed in said fastening element (106; 306, 307).

8. Boarding assistance device according to any of the preceding Claims, wherein said fastening element (306) comprises a first portion towards a connecting region for connection to said step frame, a second portion towards a connection region for connection to the vehicle or said entry structure, and an intermediate portion for connecting said first portion and said second portion, with said intermediate portion having a diameter smaller than that of said first portion and said second portion and with said measuring element (210) being coupled to said intermediate portion.

9. Boarding assistance device according to any of the preceding Claims, wherein said step frame (104) presents a frame surface facing the vehicle or said entry structure and a frame surface facing away from the vehicle or said entry structure, and wherein said fastening element (306) is fixedly connected to said frame surface facing away and is passed through a through-opening of said facing frame surface.

10. Boarding assistance device according to Claim 9, wherein said fastening element (306) is connected by means of a screw connection to said frame surface facing away.

11. Boarding assistance device according to any of the preceding Claims, wherein said fastening element (306) has a rod-shaped or strip-like configuration.

12. Boarding assistance device according to any of the preceding Claims, comprising a front fastening element (306) disposed on an end of said step frame (104), which faces said stepping board (102), and a rear fastening element (307) disposed on an end of said step frame, which faces away from said stepping board, and wherein a first measuring element (210) is coupled to said front fastening element and/or a second measuring element is coupled to said rear fastening element.

13. Boarding assistance device according to Claim 11, wherein said rear fastening element (307) is provided with a swivel joint.

14. Boarding assistance device according to any of the preceding Claims, wherein said at least one fastening element (106; 306, 307) is designed for fastening said step frame (104) on an underside or in a floor structure of the vehicle or the entry structure.

## Revendications

1. Dispositif d'aide à l'accès pour faciliter l'accès à un véhicule, ayant les caractéristiques suivantes :
un bâti (104) de marchepied, qui est constitué pour maintenir un marchepied (102) afin de faciliter l'accès ;
au moins un élément (106 ; 306, 307) de fixation propre à fixer le bâti de marchepied à un véhicule ou à une construction d'accès, l'élément de fixation ayant une première partie vers une zone de liaison au bâti de marchepied, une deuxième partie vers une zone de liaison au véhicule ou à la construction d'accès et une partie intermédiaire de liaison de la première partie et de la deuxième partie ; et
au moins un élément (210) de mesure, qui est couplé à la partie intermédiaire du au moins un élément de fixation pour détecter un allongement ou une compression de l'élément de fixation.

2. Dispositif d'aide à l'accès suivant la revendication 1, dans lequel l'élément (106 ; 306, 307) de fixation est dirigé verticalement.

3. Dispositif d'aide à l'accès suivant l'une des revendications précédentes, dans lequel le bâti (104) de marchepied est constitué pour monter le marchepied (102), de manière à ce qu'il soit mobile.

4. Dispositif d'aide à l'accès suivant l'une des revendications précédentes, dans lequel l'élément (210) de mesure est constitué pour détecter un allongement rectiligne ou une compression rectiligne de l'élément (106 ; 306, 307) de fixation dans la direction longitudinale de l'élément de fixation.

5. Dispositif d'aide à l'accès suivant l'une des revendications précédentes, dans lequel l'élément (210) de mesure est constitué pour détecter une déformation de l'élément (106 ; 306, 307) de fixation, provoquée par une charge verticale du marchepied (102), et pour mettre à disposition un signal de mesure correspondant à la charge verticale sur une interface vers un appareil de commande.

6. Dispositif d'aide à l'accès suivant l'une des revendications précédentes, dans lequel l'élément (210) de commande est constitué en jauge de contrainte, qui est montée sur une surface de l'élément (106 ; 306, 307) de fixation.

7. Dispositif d'aide à l'accès suivant l'une des revendications précédentes, dans lequel l'élément (210) de mesure est constitué en jauge de contrainte - capteur de compression, qui est monté dans l'élément (106 ; 306, 307) de fixation.

8. Dispositif d'aide à l'accès suivant l'une des revendications précédentes, dans lequel l'élément (306) de fixation a sa première partie vers une zone de liaison au bâti de marchepied, une deuxième partie vers une zone de liaison au véhicule ou à la construction d'accès et une partie intermédiaire de liaison de la première partie et de la deuxième partie, la partie intermédiaire ayant un diamètre plus petit que la première partie et que la deuxième partie, et l'élément (210) de mesure étant couplé à la partie intermédiaire.

9. Dispositif d'aide à l'accès suivant l'une des revendications précédentes, dans lequel le bâti (104) de marchepied a une surface de bâti tournée vers le véhicule ou la construction d'accès et une surface de bâti éloignée du véhicule ou de la construction d'accès et dans lequel l'élément (306) de fixation est relié rigidement à la surface de bâti éloignée du véhicule ou de la construction d'accès et est guidé par une ouverture traversante de la surface de bâti tournée vers le véhicule ou vers la construction d'accès.

10. Dispositif d'aide à l'accès suivant la revendication 9, dans lequel l'élément (306) de fixation est relié par vissage à la surface de bâti éloignée du véhicule ou de la construction d'accès.

11. Dispositif d'aide à l'accès suivant l'une des revendications précédentes, dans lequel l'élément (306) de fixation est sous la forme d'une barre ou d'une bande.

12. Dispositif d'aide à l'accès suivant l'une des revendications précédentes, comprenant un élément (306) de fixation avant, qui est disposé à une extrémité du bâti (104) de marchepied tournée vers le marchepied (102), et un élément (307) de fixation arrière, qui est disposé à une extrémité du bâti de marchepied éloignée du marchepied, et dans lequel un premier élément (210) de mesure est couplé à l'élément de fixation avant et/ou un deuxième élément de mesure est couplé à l'élément de fixation arrière.

13. Dispositif d'aide à l'accès suivant la revendication 11, dans lequel l'élément (307) de fixation arrière a une articulation tournante.

14. Dispositif d'aide à l'accès suivant l'une des revendications précédentes, dans lequel le au moins un élément (106 ; 306, 307) de fixation est constitué pour fixer le bâti (104) de marchepied à un côté inférieur ou dans une structure de plancher du véhicule ou de la construction d'accès.
